# EUROPEAN PATENT SPECIFICATION

(11) **EP 1 589 609 B1**
(45) Date of publication and mention of the grant of the patent: **23.12.2015**
(21) Application number: 05008422.7
(22) Date of filing: 18.04.2005
(51) Int. Cl.: H01Q 5/22, H01Q 1/27, H01Q 5/00, H01Q 1/46, H01Q 9/16, H04R 1/10

(54) **Earphone antenna and portable radio equipment provided with earphone antenna**
Kopfhörer-Antenne und tragbares Funkgerät mit einer solchen Antenne
Antenne d'écouteur et appareil radio portable équipé de cette antenne

(30) Priority: 19.04.2004 JP 2004123465; 07.02.2005 JP 2005030906
(43) Date of publication of application: 26.10.2005
(73) Proprietor: Sony Corporation, Tokyo 108-0075 (JP)
(72) Inventor: Yoshino, Yoshitaka, Tokyo 108-0075 (JP)
(74) Representative: Müller Hoffmann & Partner

(56) References cited:
- WO-A-03/026342
- GB-A- 2 382 722
- US-A- 3 720 874
- US-A- 4 369 521
- US-A- 5 361 405

## Description

### CROSS REFERENCE TO RELATED APPLICATIONS

The present invention contains subject matter related to Japanese Patent Application Nos. JP2004-123465 and JP2005-030906 respectively filed in the Japanese Patent Office on April 19th, 2004, and on February 7th, 2005.

### 1. Field of the Invention

The present invention relates to an earphone antenna for portable radio equipment, which is put on a human body at use, and portable radio equipment provided with this earphone antenna.

### 2. Description of Related Art

Conventionally, in portable radio equipment such as a pager, radio receiver, LCD television receiver and the like, which are used by putting on a human body, a rod antenna and an earphone antenna which utilizes a signal wire for transmitting audio signal to earphones is used as an antenna. Such is disclosed, for example, in Patent Document below.
[Patent Document 1] JP-A Laid-Open No. 2003-163529

In the portable radio equipment which uses a rod antenna or an earphone antenna, at the time of use by putting on a human body, there was a problem that because of a significant deterioration of antenna performance when put on the human body, in such a case as television broadcasts where signals with a large amount of information, e.g., video signals, are processed, a sufficient reception sensitivity cannot be obtained.

In particular, the earphone antenna which utilizes the signal wire for transmitting audio signal to earphones as an antenna had a problem that because the earphone and/or the signal wire make direct contact with the human body, the human body caused a significant influence on the radio equipment via the antenna to deteriorate stability of reception greatly.

Further, for example, in television broadcasts in Japan, VHF bands from 90 to 108 MHz (1-3 channels), from 170 to 222 MHz (4-12 channels), and UHF band from 470 to 770 MHz (13-62 channels) are used, therefore, a liquid crystal television receiver for receiving television broadcasts is required to receive high frequency signals in an extremely wide band range from 90 to 770 MHz, thereby with a conventional rod antenna or earphone antenna the performance of which is inferior to a fixed-type antenna, there was a problem that it was extremely difficult to secure a sufficient sensitivity in the frequency band range required above.

Still further, because the rod antenna and the earphone antenna is a monopole antenna which resonates at λ/4, its reception sensitivity is greatly affected depending on a ground size of a portable radio terminal, thereby limiting the design of the portable radio equipment.

Document WO 03/026342 A relates to a headphone and discloses a receiver assembly comprising a housing, a receiver unit, and having left and right audio stereo output lines which connect to a connection for connection to a headphone, each of left and right lines having an impedance in series and also having a capacitance connecting the left and right audio lines, said capacitance being located at a point between the connector and a non-output side of the inductance, wherein the receiver unit and the audio lines are connected via an inductance. The impedance is high at RF but low at audio frequencies. A coaxial cable may be used for the lines.

Furthermore, document US-A-3 720 874 relates to a dipole antenna arrangement for radio with separate speaker-microphone assembly. The speaker-microphone assembly, used with a portable radio unit containing receiving and transmitting equipment for receiving and transmitting radio signals, includes a housing with a helical antenna element mounted on the top wall to form one element of a dipole antenna. A coaxial cable having inner and outer conductors is connected from the portable unit equipment to the speaker microphone housing. The centre conductor is connected to the helical antenna and the outer conductor is terminated in the housing at a first point which is ground potential, A second outer conductor surrounds and is insulated from the first outer conductor, and is connected to the first outer conductor at the first point. The second outer conductor extends for a predetermined length along the first outer conductor to form the other element of the dipole antenna.

### SUMMARY OF THE INVENTION

The present invention is contemplated to solve the aforementioned shortcomings associated with the conventional art, and thereof it is desirable to provide an earphone antenna which is capable of reducing the adverse effect by the human body, and achieving a high gain in a wide band range, and also provide portable radio equipment which secures reception stability.

According to the present invention, the above object is achieved by the matter according to the independent claims.
Further developments of the invention are subject of the accompanying dependent claims.
The above and other aims, features and advantages of the present invention will become more apparent from the following description of the presently preferred exemplary embodiment of the invention. According to the earphone antenna of the present invention, it is enabled to reduce the influence of the human body and obtain a high gain over a wide range of frequency band.

The earphone antenna according to the present invention is provided with stereophonic earphones which are connected to the aforementioned connection block via two earphone cables, and a high frequency choke inserted in an en-route portion of one or both of the earphone cables so as to differ a resonance frequency between the earphone cables or make it variable.

Further, the earphone antenna according to an embodiment of the present invention may be configured to have a microphone and a switch for switching mounted on the aforementioned connection block.

Still further, the earphone antenna according to an embodiment of the present invention may be configured to have an amplifier mounted in the aforementioned connection block.

In the portable radio equipment according to the present invention, the earphone antenna which functions as the dipole antenna, including the earphone cable and the second wire which covers the external of the coaxial cable and the second signal lines, is configured to be connected to the main body of the radio equipment via the multipin jack, thereby securing reception stability over a wide range of frequency bands.

Further features of the invention, and the advantages offered thereby, are explained in detail hereinafter, in reference to specific embodiments of the invention illustrated in the accompanying drawings.

### BRIEF DESCRIPTION OF THE DRAWINGS

FIG. 1 is a block diagram showing a configuration of a LCD television receiver according to the present invention;
FIG. 2 is a diagram showing a configuration of a pin-jack connector for connecting between a main body of the receiver and an earphone antenna in the LCD television receiver;
FIG. 3 is a block diagram showing a configuration of the main body of the receiver;
FIG. 4 is a diagram showing a configuration of a shield cable which constitutes the earphone antenna;
FIG. 5 is a diagram showing a configuration of a connection block which constitutes the earphone antenna;
FIG. 6 is a circuit configuration diagram showing an electrical configuration of the earphone antenna;
FIG. 7 is a circuit configuration diagram showing an electrical configuration of an earphone antenna which incorporates a function of microphone mounted in the connection block;
FIG. 8 is a circuit configuration diagram showing an electrical configuration of an earphone antenna which has an amplifier mounted in the connection block; and
FIG. 9 is a diagram showing a configuration of an earphone antenna according to the present invention.

### DESCRIPTION OF THE PREFERRED EMBODIMENTS

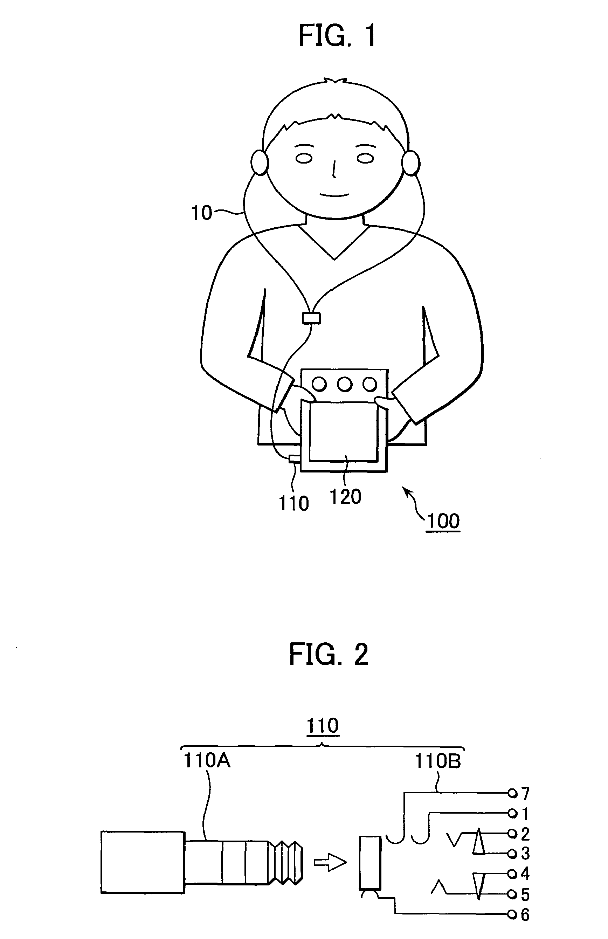

The present invention is applicable to, for example, a LCD television receiver 100 shown in FIG. 1.

In this LCD television receiver 100 shown in FIG. 1, an earphone antenna 10 according to the embodiment of the present invention is connected to a main body of the receiver 120 via a pin jack connector 110.

The pin jack connector 110, as shown in FIG. 2, is composed of a five electrode pin 110A and a jack 110B, to which five kinds of lines of antenna (Ant), headphone detection (detect), audio L channel (L), audio R channel (R), and ground (Gnd) are connected, respectively.

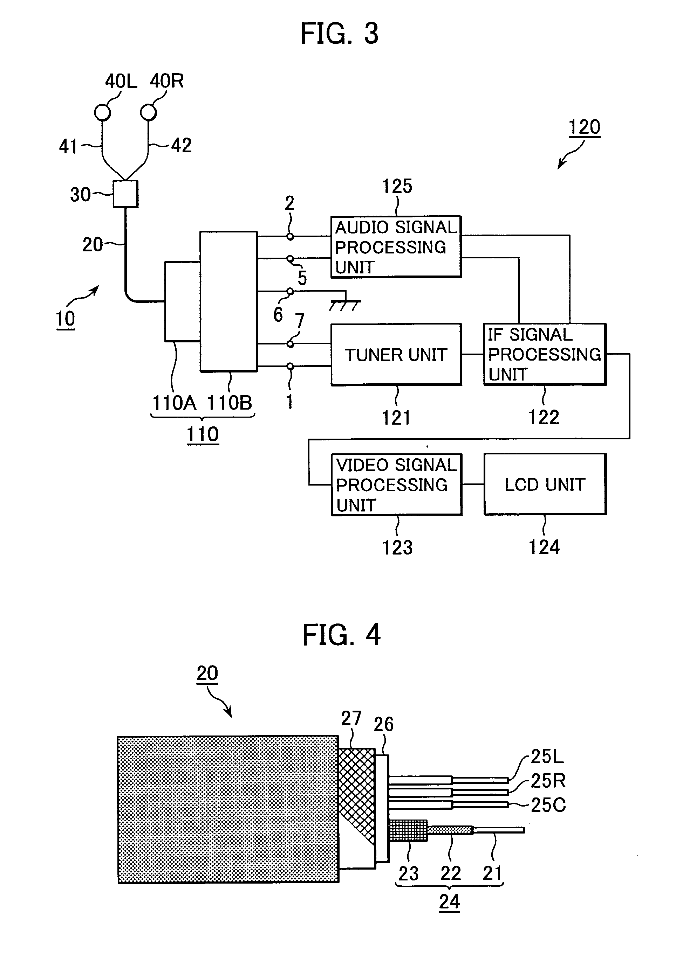

In a main body of the receiver 120, as shown in FIG. 3, there are provided a tuner unit 121, an IF signal processing unit 122 connected to the tuner 121, a video signal processing unit 123 and an audio signal processing unit 125 both connected to the IF signal processing unit 122, a liquid crystal display unit 124 connected to the video signal processing unit 123, and a jack 110B which constitutes the pin jack connector 110 described above.

In this LCD television receiver 100, the jack 110B described above has five movable terminals 1, 2, 5, 6, 7 and two fixed terminals 3, 4 as shown in FIG. 2, where, as shown in FIG. 3, the movable terminal 7 is connected as an antenna terminal (Ant) and the movable terminal 1 as ground to the tuner unit 121, further, movable terminals 2, 5 are connected to the audio signal processing unit 125 as an audio L channel terminal (L) and an audio R channel terminal (R). The movable terminal 6 is connected to GND of a substrate in the main body of the radio equipment as a common ground terminal (Gnd) of the radio equipment. The fixed terminal 3, 4 is a terminal for firmly securing the pins. The earphone antenna 10 is composed of a shield cable 20, one end of which is connected to the receiver's main body 120 via the five pin jack connector 110, a connection block 30 which is connected to the other end of the shield cable 20, and stereophonic earphones 40L, 40R which are connected to the connection block 30 via two earphone cables 41, 42.

The shield cable 20 is composed of:, as shown in FIG. 4, a coaxial cable 24 having a central conductor 21 which passes high frequency signal, coated with an insulator 22 further covered with a shield wire 23; signal lines 25L, 25R for audio signal which are insulation-coated; and a grounding wire 25C, wherein external thereof is covered with a shield wire 27 having a structure wound with soft copper via an insulation sheet 26 made of paper or vinyl sheet, alternatively having a braided structure.

Then, at one end of this shield cable 20, there is provided a five electrode pin 110A which is connected to the central conductor 21 of the coaxial cable 24 and the shield wire 23 thereof, signal lines 25L, 24R for audio signal, and the grounding wire 25C. Further, at the other end of this shield cable 20, there is provided the connection block 30 which is connected to the central conductor 21, the shield wire 23 thereof, the signal lines 25R, 25R for audio signals, the grounding wire 25C and the shield wire 27.

Here, although the shield wire 27 which covers the coaxial cable 24, audio signal lines 25L, 25R and the grounding wire 25C is connected to the aforementioned connection block 30, but is not connected to the aforementioned pin 110A.

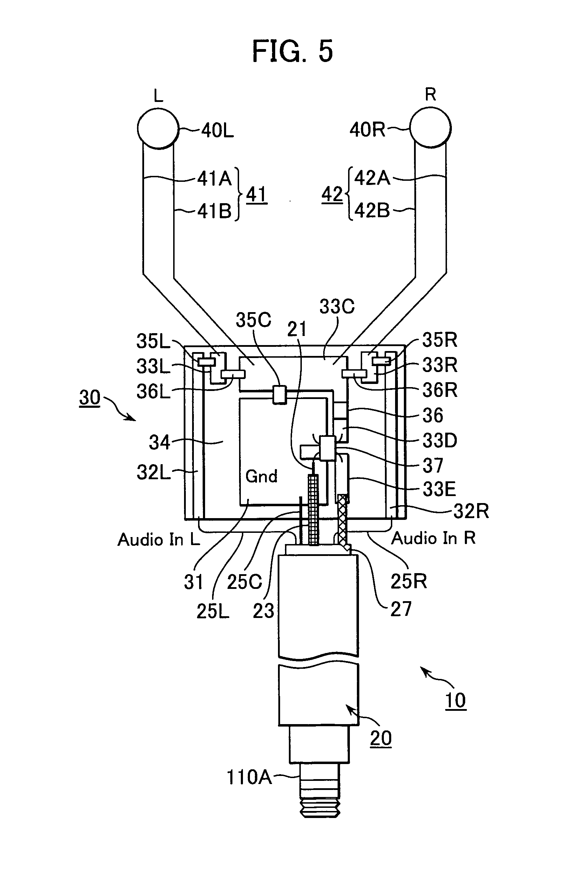

As shown in FIG. 5, the connection block 30 has a substrate 34 on which there are formed a ground pattern 31 in the center thereof, transmission line patterns 32L, 32R for stereophonic audio signal which are mounted on both sides of the ground pattern 31, three connection lands 33L, 33R, 33C mounted on upper edge portions toward the ground pattern 31, a fourth and a fifth connection lands 33D, 33E mounted at one side toward the ground pattern 31 on the substrate.

In this connection block 30, an edge portion of the transmission line pattern 32L, 32R for the stereophonic audio signal is connected to a first and a second connection lands 33L, 33R among the three connection lands 33L, 33R, 33C via a high frequency choke 35L, 35R. Further, the ground pattern 31 is connected to the third connection land 33C among the three connection lands 33L, 33R, 33C via a high frequency choke 35C. Still further, the first connection land 33L and the third connection land 33C are connected via a chip capacitor 36L. The second connection land 33R and the third connection land 33C are connected via a chip capacitor 36R. Further, the third connection land 33C and the fourth connection land 33D are connected via a chip capacitor 36. In addition, a balun 37 for performing impedance and balanced/unbalanced mode transform is mounted, which is connected to the fourth connection land 33D, the ground pattern 31 and the fifth connection land 33E. By way of example, the balun 37 is configured such that one end of its balanced side is connected to the fourth connection land 33D, the other end of the balanced side is connected to the fifth connection land 33E, and one end of its unbalanced side is connected to the ground pattern 31.

Then, in this connection block 30, a left side earphone cable 41 including two signal lines 41A, 41B for supplying left side audio signal to a left side earphone 40L is connected to the first connection land 33L and the third connection land 33C, further a right side earphone cable 42 including two signal lines 42A, 42B for supplying right side audio signal to a right side earphone 40R is connected to the second connection land 33R and the third connection land 33C.

Also, to this connection block 30, the aforementioned shield cable 20 is connected in such a manner as will be described in the following.

That is, the left side audio signal line 25L and the right side signal line 25R of the shield cable 20 are connected to the transmission line pattern 32L and 32R for audio signal formed on the substrate 34,and further the grounding wire 25C thereof is connected to the ground pattern 31. Further, the central conductor 21 and the shield wire 23 which constitute the axial configuration of the shield cable 20 are mounted on the ground pattern 31, then the shield wire 23 thereof is connected to the ground pattern 31 and an end of the central conductor is connected to the other end of the unbalanced side of the balun 37. Still further, the shield wire 27 is connected to the fifth connection land 33E.

Here, as the aforementioned high frequency choke 35L, 35R, 35C, ferrite beads, for example, BLM18HD102SN1, size 1608 produced by Murata Manufacturing Ltd., are used. The high frequency choke 35L, 35R, 35C, which uses this ferrite beads, becomes low impedance to audio signals in the frequency range below 20 kHz, and high impedance to high frequency signals, thereby blocking passage of the high frequency signal. Further, as the chip capacitors 36L, 36R, 36C, such ones having capacitance of 10 pF are used respectively, so as to become high impedance to audio signals in the frequency range below 20 kHz in order to block passage of the audio signal, and become low impedance to the high frequency signal.

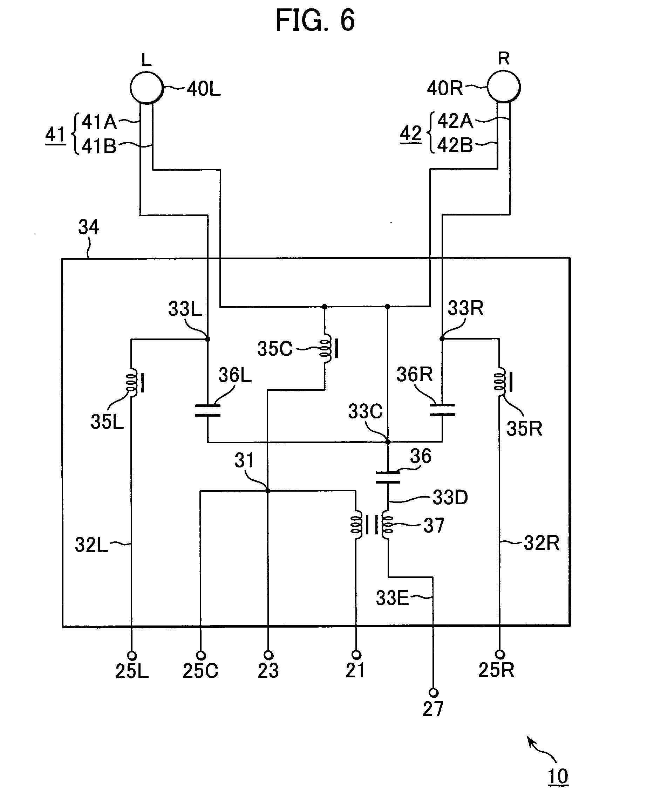

This earphone antenna 10, as indicated in a circuitry configuration diagram shown in FIG. 6, leads out earphone cables 41, 42 each composed of two signal lines of the left side line 41A and GND 41B/the right side line 42A and GND, on each side, for transmitting audio signal to speakers 40L, 40R of a stereophonic earphone, then in order to separate the audio signal from the high frequency signal, high frequency wave chokes 35L, 35R, 35C using ferrite beads are provided at an input portion of audio signal and at a portion falling to the ground, i.e., at portions 33L, 33R, 33C of connection lands, which become high impedance (1 kΩ or greater) in the frequency band for use in television broadcasts, and low impedance in the audio frequency band (less than 20 kHz), thereby separating the audio signal and the high frequency signal.

That is, because the earphone cable 41, 42, each including two signal lines 41A, 41B/42A, 42B on each side, is connected, in terms of high frequency, to the central conductor 21 which is a signal line of the coaxial cable 23, therefore, in order to separate the audio range therefrom, it is configured to connect between the connection lands 33L, 33R, 33D, 33E via chip capacitors 36L, 36R, 36 of 10 pF, so as to separate signals in the audio range, and connect in RF signals (frequency range of television bands).

Here, the frequency bands allocated for use to television broadcasts in Japan are, 90M to 108MHz (1-3 channels) and 170M to 222MHz (4-12 channels) in VHF, and 470M to 770MHz (13-62 channels) in UHF band.

Therefore, in this earphone antenna 10, by connecting the earphone cable 41, 42 and the shield wire 27 which covers the shield cable 20 to the axial cable 24 via the balun 37, the earphone cable 41, 42 and the shield wire 27 are configured to be used as an aerial having a dipole antenna structure resonating at its line length, and each length thereof is adjusted to be able to receive 100 MHz in the VHF band.

In the earphone antenna 10 according to this example, a characteristic impedance of the coaxial cable 24 is set at 75 Ω, a length of the shield cable 20 at 70 cm, a length of the earphone cable 41, 42 at 50cm, and it is adjusted to resonate at 100 MHz. In 200 MHz, it is configured to be able to receive as 1λ antenna. In UHF, it is configured to use harmonics oscillations of 100 MHz and 200 MHz (triple, quintuple, septuple waves).

The earphone antenna 10 according to the example, because of its dipole structure, is stabilized as an antenna, and various functions can be added to the connection block 30.

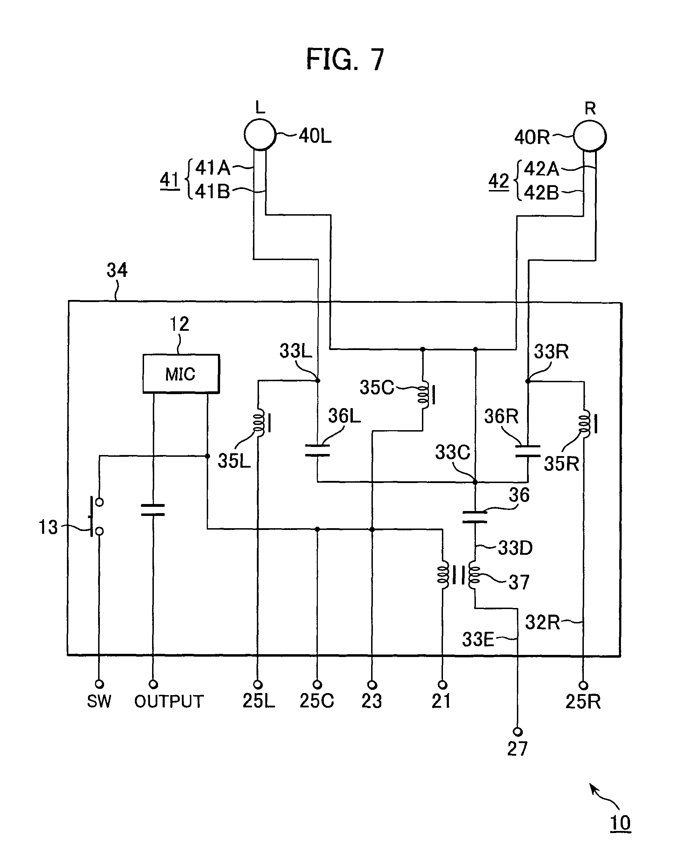

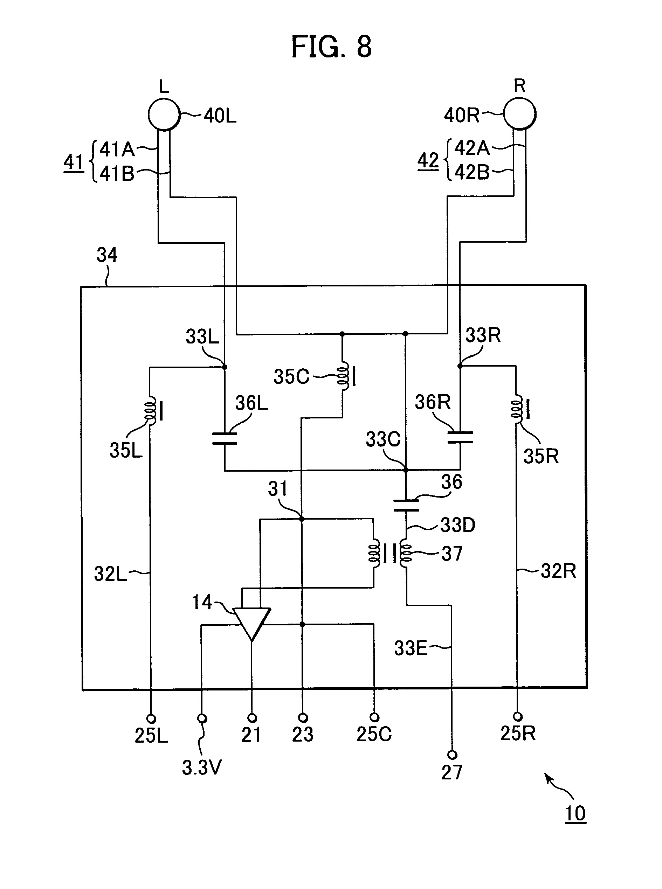

For example, for a portable telephone, by implementing a circuit configuration provided with a microphone 12 and a switch 13 as shown in FIG. 7, it is able to add a function of the microphone 12 without decreasing antenna gain. Also, by adding an amplifier 14 in a manner as shown in FIG. 8, it is able to place the amplifier 14 in the vicinity of the antenna, so as to achieve a significant improvement in NF (noise factor) as a system.

Here, in the earphone antenna 10 described above, the lengths of the two earphone cables 41, 42 are set equal, however, it is also possible to vary respective lengths of the two earphone cables 41, 42 from the connection lands 33L, 33R, 33C in the connection block 30 to the earphones 40L, 40R, in order to be able to correspond to different frequencies.

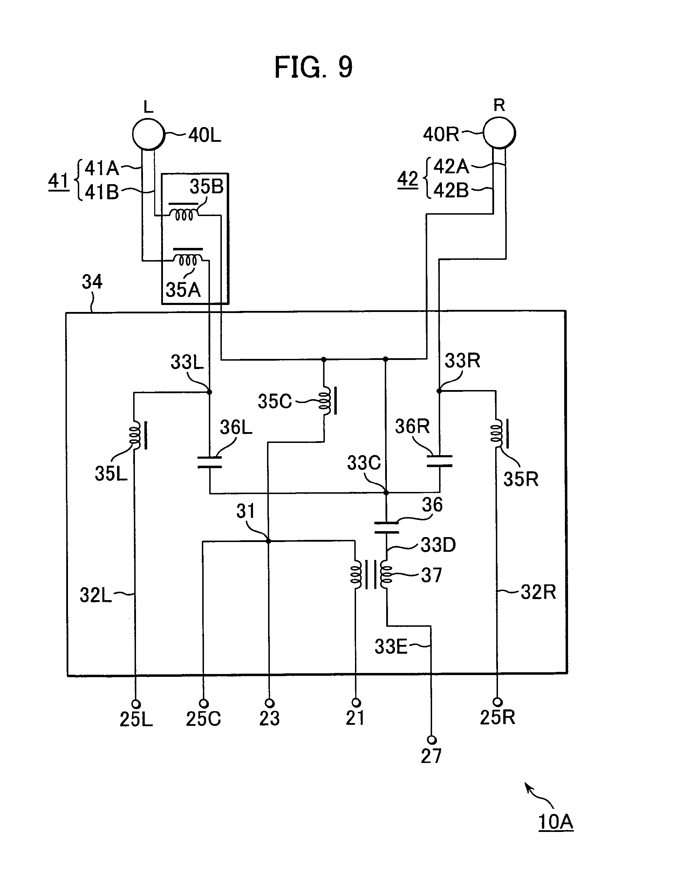

Alternatively, by inserting a high frequency choke (ferrite beads) 35A, 35B into an en-route portion of one of the two earphone cables 41, 42, for example, of the earphone cable 41 for the left side audio signal, as indicated in an earphone antenna 10A shown in FIG. 9, it may be configured to separate high frequency signal to shorten its resonance length. In the earphone antenna 10A shown in FIG. 9, it is set such that a resonance length in one earphone antenna 41 is 250 mm while a resonance length in the other earphone antenna 42 is 400 mm, a characteristic impedance of the coaxial cable 21 is 75Ω, and a length of the shield cable 20 is 600 mm. By way of example, in this earphone antenna 10A, the other components are the same as in the aforementioned earphone antenna 10, therefore, the same components are indicated by the same symbols and numeric in FIG. 9, omitting detailed description thereof.

It should be understood by those skilled in the art that various modifications, combinations, sub-combinations and alterations may occur depending on design requirements and other factors insofar as they are within the scope of the appended claims or the equivalents thereof.

## Claims

1. An earphone antenna (10) comprising:
a pair of earphone cables (41, 42) including each a pair of first signal lines (41A, 41B, 42A, 42B) which are insulation-coated for supplying stereophonic audio signal to stereophonic earphones (40L, 40R);
a shield cable (20) including a coaxial cable (24) having a central conductor (21) for passing high frequency signal, being coated with an insulator (22) and further covered with a first shield wire (23),
second signal lines (25L, 25R) for audio signals,
a grounding wire (25C) which are insulation-coated, and
a second shield wire (27) which covers said coaxial cable (24), said second signal lines (25L 25R) for audio signal and said grounding wire (25C) via an insulation material (26);
a multipin connector (110A) for connecting said shield cable (20) to a main body of a radio equipment (100), wherein the second shield wire (27) is not connected to said multipin connector (110A), and
a connection block (30) including a substrate (34) with a ground (31) formed thereon and a balun (37), said connection block (30) connects the other end of said shield cable (20) to said earphone cables (41, 42),
wherein in said connection block (30):
- said first shield wire (23) of said coaxial cable (24) and said grounding wire (25C) are connected to said ground (31),
- the pair of the first signal lines (41A, 41B) of one (41) of the pair of earphone cables (41, 42) are connected respectively to the ground (31) and one (25L) of the second signal lines (25L, 25R) via high frequency chokes (35C, 35L) and the pair of the first signal lines (42A, 42B) of the other one (42) of the pair of earphone cables (41, 42) are connected respectively to the ground (31) and the other one (25R) of the second signal lines (25L, 25R) via high frequency chokes (35C, 35R), said high frequency chokes (35C, 35L, 25R) become low impedance in a frequency range of audio signal and high impedance in a frequency range of high frequency signal, forming thereby stereophonic audio signal transmission paths (32L, 32R), and
- said central conductor (21) of said coaxial cable (24) is connected to an unbalanced part of said balun (37) for carrying out impedance and balanced/unbalanced mode transform, said pairs of first signal lines (41A, 41B, 42A, 42B) of said stereophonic earphone cables (41, 42) are connected respectively to one end of a balanced part of said balun (37) via capacitors (36, 36L, 36R) which become high impedance in said frequency region of said stereophonic audio signal and low impedance in said frequency region of said high frequency signal, and the other end of said balanced part of said balun is connected to said second shield wire (27), forming a dipole antenna which includes said earphone cables (41, 42) and said second shield wire (27);
and wherein the earphone antenna (10) further comprises high frequency chokes (35A, 35B) inserted in a portion en-route to one or both of said earphone cables (41, 42) to shorten its resonance length and thereby alter a resonance frequency between said earphone cables (41. 42).

2. An earphone antenna (10) according to claim 1, wherein a microphone (12) and a switch are added, mounted and connected via said connection block (30).

3. An earphone antenna (10) according to claim 1, wherein a noise factor improving amplifier (14) is added, mounted and connected via said connection block (30).

4. A portable radio equipment comprising:
a main body of radio equipment (110) provided with a multipin jack (110A) which is connected to a tuner and an audio signal output unit; and
an earphone antenna (10) according to at least one of claims 1 to 3.

## Patentansprüche

1. Kopfhörerantenne (10), aufweisend:
ein Paar Kopfhörerkabel (41, 42), die jeweils ein Paar erster Signalleitungen (41A, 41B, 42A, 42B) enthalten, die isolierbeschichtet sind, um an Stereokopfhörer (40L, 40R) ein Stereoaudiosignal zu liefern;
ein Abschirmungskabel (20), das ein Koaxialkabel (24) mit einem Mittelleiter (21) zum Leiten eines Hochfrequenzsignals enthält, der mit einem Isolator (22) beschichtet ist und ferner mit einem ersten Abschirmungsdraht (23) abgedeckt ist;
zweite Signalleitungen (25L, 25R) für Audiosignale,
einen isolierbeschichteten Massedraht (25C) und
einen zweiten Abschirmungsdraht (27), der das Koaxialkabel (24), die zweiten Signalleitungen (25L, 25R) für Audiosignale und den Massedraht (25C) durch ein Isoliermaterial (26) abdeckt;
einen Mehrstiftverbinder (110A) zum Verbinden des Abschirmungskabels (20) mit einem Hauptkörper einer Funkausrüstung (100), wobei der zweite Abschirmungsdraht (27) nicht mit dem Mehrstiftverbinder (110A) verbunden ist; und
einen Verbindungsblock (30), der ein Substrat (34) mit einer darauf gebildeten Masse (31) und einen Balun (37) aufweist, wobei der Verbindungsblock (30) das andere Ende des Abschirmungskabels (20) mit den Kopfhörerkabeln (41, 42) verbindet;
wobei in dem Verbindungsblock (30):
- der erste Abschirmungsdraht (23) des Koaxialkabels (24) und der Massedraht (25C) mit der Masse (31) verbunden sind,
- das Paar erster Signalleitungen (41A, 41B) von einem (41) aus dem Paar Kopfhörerkabel (41, 42) mit der Masse (31) bzw. einer (25L) der zweiten Signalleitungen (25L, 25R) über Hochfrequenzdrosseln (35C, 35L) verbunden ist und das Paar erster Signalleitungen (42A, 42B) des anderen (42) aus dem Paar Kopfhörerkabel (41, 42) mit der Masse (31) bzw. der anderen (25R) der zweiten Signalleitungen (25L, 25R) über Hochfrequenzdrosseln (35C, 35R) verbunden ist, wobei die Hochfrequenzdrosseln (35C, 35L, 25R) in einem Frequenzbereich eines Audiosignals eine niedrige Impedanz annehmen und in einem Frequenzbereich eines Hochfrequenzsignals eine hohe Impedanz annehmen und dadurch Stereoaudiosignal-Übertragungswege (32L, 32R) bilden, und
- der Mittelleiter (21) des Koaxialkabels (24) mit einem unsymmetrischen Teil des Baluns (37) verbunden ist, um eine Impedanz und symmetrische/unsymmetrische Modustransformation auszuführen, wobei die Paare erster Signalleitungen (41A, 41B, 42A, 42B) der Stereokopfhörerkabel (41, 42) über Kondensatoren (36, 36L, 36R), die im Frequenzband des Stereoaudiosignals eine hohe Impedanz annehmen und im Frequenzbereich des Hochfrequenzsignals eine niedrige Impedanz annehmen, jeweils mit einem Ende eines symmetrischen Teils des Baluns (37) verbunden sind und das andere Ende des symmetrischen Teils des Baluns mit dem zweiten Abschirmungsdraht (27) verbunden ist, wodurch eine Dipolantenne gebildet ist, die die Kopfhörerkabel (41, 42) und den zweiten Abschirmungsdraht (27) aufweist,;
und wobei die Kopfhörerantenne (10) ferner Hochfrequenzdrosseln (35A, 35B) aufweist, die in einem Abschnitt auf dem Weg zu einem oder zu beiden Kopfhörerkabeln (41, 42) eingesetzt sind, um deren Resonanzlänge zu verkürzen und dadurch eine Resonanzfrequenz zwischen den Kopfhörerkabeln (41, 42) zu verändern.

2. Kopfhörerantenne (10) nach Anspruch 1, wobei ein Mikrophon (12) und ein Schalter hinzugefügt sind, die durch den Verbindungsblock (30) angebracht und verbunden sind.

3. Kopfhörerantenne (10) nach Anspruch 1, wobei ein Rauschfaktorverstärker (14) hinzugefügt ist, der durch den Verbindungsblock (30) angebracht und verbunden ist.

4. Tragbare Funkausrüstung, die Folgendes aufweist:
einen Hauptkörper einer Funkausrüstung (110), der mit einer Mehrstiftbuchse (110A) versehen ist, die mit einem Abstimmgerät und mit einer Audiosignal-Ausgabeeinheit verbunden ist; und
eine Kopfhörerantenne (10) nach wenigstens einem der Ansprüche 1 bis 3.

## Revendications

1. Antenne d'écouteur (10) comprenant :
- une paire de câbles d'écouteur (41, 42) comprenant chacun une paire de premières lignes de signaux (41A, 41B, 42A, 42B) qui sont revêtues par un isolant afin de fournir un signal audio stéréophonique écouteurs à des stéréophoniques (40L, 40R) ;
- un câble de protection (20) comprenant un câble coaxial (24) possédant un conducteur central (21) afin de faire passer un signal haute fréquence, lequel est revêtu d'un isolant et est également revêtu d'un premier fil de protection (23) ;
- des secondes lignes de signaux (25L, 25R) pour des signaux audio ;
- un fil de mise à la terre (25C) qui est revêtu d'un isolant ; et
- un second fil de protection (27) qui recouvre le câble coaxial (24), les secondes lignes de signaux (25L, 25R) pour les signaux audio et le fil de mise à la terre (25C) via un matériau isolant (26) ;
- un connecteur à broches multiples (110A) afin de connecter le câble de protection (20) à un corps principal d'un équipement radio (100), le second câble de protection (27) n'étant pas connecté au connecteur à broches multiples (110A) ; et
- un bloc de connexion (30) comprenant un substrat (34) avec une terre (31) formée sur celui-ci et un balun (37), lequel bloc de connexion (30) connecte l'autre extrémité dudit câble de protection (20) aux câbles d'écouteur (41, 42) ;
- dans laquelle dans ledit bloc de connexion (30) :
- le premier fil de protection (23) du câble coaxial (24) et le fil de mise à la terre (25C) sont connectés à la ladite terre (31) ;
- la paire de premières lignes de signaux (41A, 41B) pour l'un (41) des deux câbles d'écouteur (41, 42) est connectée respectivement à la terre (31) et à une (25L) des secondes lignes de signaux (25L, 25R) via des bobines d'arrêt haute fréquence (35C, 35L), et la paire de premières lignes de signaux (42A, 42B) de l'autre (42) des deux câbles d'écouteur (41, 42) est connectée respectivement à la terre (31) et à l'autre (25R) des secondes lignes de signaux (25L, 25R) via des bobines d'arrêt haute fréquence (35C, 35R), lesquelles bobines d'arrêt haute fréquence (35C, 35L, 25R) prennent une impédance réduite dans une plage de fréquence d'un signal audio et une impédance élevée dans une plage de fréquence d'un signal haute fréquence, formant ainsi des trajets de transmission de signal audio stéréophonique (32L, 32R) ; et
- le conducteur central (21) du câble coaxial (24) est connecté à une partie non équilibrée du balun (37) afin de réaliser une impédance et une transformée en mode équilibré/non équilibré, lesdites paires de premières lignes de signaux (41A, 41B, 42A, 42B) desdits câbles d'écouteurs stéréophoniques (41, 42) sont connectées respectivement à une extrémité d'une partie équilibrée du balun (37) via des condensateurs (36, 36L, 36R) qui prennent une impédance élevée dans la région de fréquence du signal audio stéréophonique et une impédance faible dans la région de fréquence du signal haute fréquence, et l'autre extrémité de la partie équilibrée du balun est connectée au second fil de protection (27), formant une antenne dipôle qui comprend lesdits câbles d'écouteur (41, 42) et le second fil de protection (27) ;
- et laquelle l'antenne d'écouteur (10) comprend en outre des bobines d'arrêt haute fréquence (35A, 35B) insérées dans une partie allant vers un ou les deux câbles d'écouteur (41, 42) afin de raccourcir sa longueur de résonance et modifier ainsi une fréquence de résonance entre lesdits câbles d'écouteur (41, 42).

2. Antenne d'écouteur (10) selon la revendication 1, dans laquelle un microphone (12) et un commutateur sont ajoutés, montés et connectés via le bloc de connexion (30).

3. Antenne d'écouteur (10) selon la revendication 1, dans laquelle un amplificateur améliorant le facteur de bruit (14) est ajouté, monté et connecté via le bloc de connexion (30).

4. Equipement radio portable comprenant :
- un corps principal d'équipement radio (110) comportant un jack à broches multiples (110A) connecté à un syntoniseur et une unité de sortie de signal audio ; et
- une antenne d'écouteur (10) selon l'une au moins des revendications 1 à 3.
